# EUROPÄISCHE PATENTSCHRIFT

(11) **EP 2 797 804 B1**
(45) Veröffentlichungstag und Bekanntmachung des Hinweises auf die Patenterteilung: **18.05.2016**
(21) Anmeldenummer: 12809590.8
(22) Anmeldetag: 06.12.2012
(51) Int. Cl.: B62D 1/184

(54) **FESTSTELLEINRICHTUNG FÜR EINE VERSTELLBARE LENKSÄULE**
LOCKING DEVICE FOR AN ADJUSTABLE STEERING COLUMN
DISPOSITIF DE FIXATION POUR UNE COLONNE DE DIRECTION RÉGLABLE

(30) Priorität: 28.12.2011 DE 102011057104
(43) Veröffentlichungstag der Anmeldung: 05.11.2014
(73) Patentinhaber: ThyssenKrupp Presta AG, 9492 Eschen (LI); ThyssenKrupp AG, 45143 Essen (DE)
(72) Erfinder: HAHN, Michael, 9434 Au (SG) (CH); FLEISCHER, Martin, 9436 Balgach (CH)
(74) Vertreter: Fechner, Thomas
(86) Internationale Anmeldenummer: PCT/EP2012/005044
(87) Internationale Veröffentlichungsnummer: WO 2013/097922

(56) Entgegenhaltungen:
- EP-A2- 1 747 967
- EP-A2- 1 795 425
- FR-A1- 2 834 680

## Beschreibung

Die vorliegende Erfindung betrifft eine Feststelleinrichtung für eine verstellbare Lenksäule für ein Kraftfahrzeug, wobei die Feststelleinrichtung einen Nockenträger mit zumindest einem fix daran angeordneten Nocken und zumindest einen Gegennockenträger mit zumindest einem fix daran angeordneten Gegennocken und mit zumindest einem Anschlag aufweist, wobei der Nockenträger und der Gegennockenträger relativ zueinander um eine Drehachse verdrehbar angeordnet sind und der Nocken des ersten Nockenträgers bei Verdrehung von Nockenträger und Gegennockenträger relativ zueinander um die Drehachse mit dem Gegennocken des Gegennockenträgers zur Erzeugung eines Hubes in Längsrichtung der Drehachse zusammenwirkt.

Gattungsgemäße Feststelleinrichtungen bzw. Spanneinrichtungen für verstellbare Lenksäulen werden in Kraftfahrzeugen eingesetzt, um die Position des Lenkrades in der geöffneten Stellung der Feststelleinrichtung an den jeweiligen Fahrzeuglenker anpassen zu können. In ihrer Schließstellung hält die Feststelleinrichtung die Lenksäule in ihrer vorab eingestellten Position fest. Z.B. mittels eines meist von Hand bedienbaren Hebels können der Nockenträger und der Gegennockenträger gegeneinander verdreht werden. Beim Stand der Technik sind unterschiedliche Nockenträger und Gegennockenträger bekannt, bei denen die Nocken und Gegennocken unterschiedlich ausgeformt sind, also auch eine voneinander verschiedene Nocken- bzw. Gegennockenkonturfläche aufweisen. Häufig wird beim Gegennockenträger auch vom Nockenfolger gesprochen. Dies ist aber lediglich eine sprachliche Konvention. Letztendlich handelt es sich bei Nockenträger und Gegennockenträger jeweils um Nockenträger mit entsprechenden Nocken.

Aus der EP 1 747 967 A2 ist eine gattungsgemäße Feststelleinrichtung für eine verstellbare Lenksäule für ein Kraftfahrzeug bekannt. An den Nocken des Nockenträgers dieser dort gezeigten Feststelleinrichtung sind Federzungen vorgesehen, welche dazu dienen, in der Schließstellung Nockenträger und Gegennockenträger miteinander zu arretieren. Hierzu wird beim Verdrehen von Nockenträger und Gegennockenträger gegeneinander ein Fortsatz am Ende der Gegennocken mittels der am Nocken angeordneten Federzunge beim Weg in die Schließstellung überfahren, sodass die Federzunge hinter dem Fortsatz einrasten kann, wenn sich die Feststelleinrichtung in ihrer Schließstellung befindet.

Die EP 1 795 425 A2 offenbart die Merkmale des Oberbegriffs des Anspruchs 1.

Aufgabe der Erfindung ist es nun, eine gattungsgemäße Feststelleinrichtung dahingehend zu verbessern, dass sie dem Fahrzeuglenker beim Verdrehen von Nockenträger und Gegennockenträger gegeneinander ein angenehmes Betätigungsgefühl ermöglicht, möglichst verschleißarm ist und auch geräuscharm ist.
Gelöst wird diese Aufgabe durch eine Feststelleinrichtung gemäß Patenanspruch 1.
Es ist somit vorgesehen, dass die Feststelleinrichtung zumindest einen Dämpfungskörper aufweist, welcher zumindest ein elastisch deformierbares Material aufweist, welches weicher als der Nockenträger und der Anschlag ist, wobei der Nockenträger bei der Verdrehung von Nockenträger und Gegennockenträger relativ zueinander um die Drehachse in einer Anschlagstellung unter Zwischenlage des Dämpfungskörpers am Anschlag anschlägt.
In anderen Worten ist es somit eine Grundidee der Erfindung, zwischen den Nockenträgern und zumindest einen Anschlag des Gegennockenträger einen Dämpfungskörper zumindest in der Anschlagstellung zwischenzulegen. Dieser Dämpfungskörper verhindert ein abruptes hartes Anschlagen des Nockenträgers am Anschlag und gibt somit dem Fahrzeuglenker, wenn er die Feststelleinrichtung betätigt und Nockenträger und Gegennockenträger entsprechend weit relativ zueinander um die Drehachse verdreht, ein angenehmes sanftes Anschlaggefühl. Weiters dämpft der Dämpfungskörper auch Geräusche und allfällige Vibrationen. Würde die Zwischenlage fehlen, so würde der Nockenträger in der Anschlagstellung ungedämpft am Anschlag anschlagen. Der Dämpfungskörper bzw. die Dämpfungskörper bestehen aus einem weicheren, also aus einem anderen Material als der Nockenträger und der Anschlag. Das Material des Dämpfungskörpers ist elastisch deformierbar. Der Dämpfungskörper wird entsprechend zwischen dem Anschlag und dem Nockenträger beim Anschlagen komprimiert.

Es kann vorgesehen sein, dass der Nockenträger mittels eines Nockens oder mehrerer Nocken unter Zwischenlage des bzw. jeweils eines Dämpfungskörpers am Anschlag des Gegennockenträgers bzw. an den Anschlägen des Gegennockenträgers in der Anschlagstellung anschlägt. Es kann aber auch vorgesehen sein, dass der Nockenträger einen gesonderten Teil oder Abschnitt bzw. ein vom Nocken zu unterscheidenden gesonderten Gegenanschlag aufweist, welcher in der Anschlagstellung unter Zwischenlage des Dämpfungskörpers am Anschlag des Gegennockenträgers anschlägt. Auch hier ist natürlich eine Mehrzahl von Gegenanschlägen und Anschlägen an Nockenträger und Gegennockenträger und eine Mehrzahl von Dämpfungskörpern möglich.

Bei den Nocken bzw. Gegennocken handelt es sich jeweils um Vorsprünge bzw. Gebirge, welche über eine entsprechende Basis des Nockenträgers bzw. Gegennockenträgers überstehen. Das Überstehen erfolgt günstigerweise in Richtung parallel zur Längsrichtung der Drehachse. Die Nocken können aber auch in radialer Richtung bezüglich der Drehachse über die entsprechenden Basisbereiche von Nockenträger und Gegennockenträger überstehen. Nocken und Gegennocken weisen als Gleitflächen günstigerweise Nockenkonturflächen bzw. Gegennockenkonturflächen auf, mit denen sie beim Verdrehen von Nockenträger und Gegennockenträger relativ zueinander um die Drehachse aneinander entlanggleiten. Die Nockenkonturflächen bzw. Gegennockenkonturflächen haben günstigerweise keine Anschlagfunktion. Die Flächen mit denen der Nockenträger unter Zwischenlage des Dämpfungskörpers oder der Dämpfungskörper am Anschlag des Gegennockenträgers anschlägt, sind somit günstigerweise getrennt von den Nockenkonturflächen bzw. Gegennockenkonturflächen. Nocken und Gegennocken können fix, vorzugsweise einstückig, am Nockenträger bzw. Gegennockenträger angeordnete Fortsätze sein. Neben der einstückigen Ausformung von Nocken und Nockenträger bzw. Gegennocken und Gegennockenträger ist es aber auch denkbar, Nocken und Gegennocken in anderer Art und Weise am Nockenträger bzw. Gegennockenträger zu befestigen. Es kann auch vorgesehen sein, dass Nocken und/oder Gegennocken Abrollkörper wie Rollen oder Kugeln aufweisen, mit denen sie dann am jeweiligen Nocken bzw. Gegennocken entlanggleiten oder rollen. Bevorzugte Ausgestaltungsformen der Erfindung sehen aber jedenfalls vor, dass der Nocken bzw. die Nocken und der Gegennocken bzw. die Gegennocken ausschließlich aneinander entlang gleitend, also ohne eine Abrollbewegung zusammenwirken. Erfindungsgemäße Feststelleinrichtungen können sowohl für die reibschlüssige als auch für die formschlüssige Fixierung der Lenksäule in deren Schließstellung vorgesehen sein. Beide Typen, also Reibschluss und Formschluss sind an sich bekannt und müssen hier nicht weiter erläutert werden.

Im Sinne einer einfachen und kostengünstigen Herstellung erfindungsgemäßer Feststelleinrichtungen sehen bevorzugte Varianten vor, dass der Dämpfungskörper ein zunächst separat gefertigtes und dann am Nockenträger oder am Gegennockenträger befestigtes Bauteil ist. Die Dämpfungskörper können dabei direkt am Nockenträgers, z.B. direkt an dessen Nocken oder Gegenanschlägen, oder am Anschlag des Gegennockenträgers befestigt sein. Sind mehrere Anschläge vorhanden, so ist günstigerweise jeweils ein Dämpfungskörper dem jeweiligen Anschlag zugeordnet. Wie bereits oben angedeutet, weist der Dämpfungskörper günstigerweise zumindest einen elastisch deformierbaren Körper auf. Der Dämpfungskörper kann auch vollständig aus einem solchen elastisch deformierbaren Körper bestehen. Günstigerweise handelt es sich beim elastisch deformierbaren Körper bzw. Dämpfungskörper um einen Elastomerkörper wie z.B. Gummi oder aus einem anderen Elastomer. Der Dämpfungskörper kann der Einfachheit halber aus einem Monomaterial also aus einem einzigen Material bestehen. Das elastisch deformierbare Material des Dämpfungskörpers führt günstigerweise bei einer entsprechenden Kompressionsbeanspruchung in der Anschlagstellung zu einem Energieabbau, also zu einer Umwandlung der ins System eingebrachten Kräfte bzw. Energie in Wärme, sodass der gewünschte Dämpfungseffekt entsteht. Günstigerweise weist der Dämpfungskörper gummielastische Eigenschaften auf.

Wie bereits angedeutet, kann vorgesehen sein, dass der Nockenträger in der Anschlagstellung unter Zwischenlage mehrerer Dämpfungskörper an mehreren Anschlägen des Gegennockenträgers anschlägt. Auch hierbei ist es wiederum möglich, dass der Nockenträger mit mehreren Nocken in der Anschlagstellung unter Zwischenlage mehrerer Dämpfungskörper an mehreren Anschlägen des Gegennockenträgers anschlägt. Natürlich ist es auch möglich, dass wie bereits eingangs erläutert, der Nockenträger von den Nocken separierte Anschlagbereiche bzw. Gegenanschläge aufweist, für die dann Entsprechendes gelten kann. Im Sinne einer einfachen Herstellung und Montage ist bei mehreren Dämpfungskörpern vorzugsweise vorgesehen, dass die Dämpfungskörper Teil eines gemeinsamen, in sich zusammenhängenden Dämpfungskörperbauteils sind, welches zunächst als separates Bauteil gefertigt und dann am Nockenträger oder am Gegennockenträger befestigt ist. Das gemeinsame Dämpfungskörperbauteil kann dann in einem einzigen Arbeitsschritt bzw. als Ganzes als vorgefertigtes Bauteil am Nockenträger bzw. Gegennockenträger bzw. an den Nocken oder Gegennocken befestigt werden. Grundsätzlich ist es denkbar, dass die Dämpfungskörper beim Erreichen der Schließstellung und/oder auch beim Erreichen der geöffneten Stellung der Feststelleinrichtung zum Einsatz kommen bzw. wirken. Bevorzugte Ausgestaltungsformen der Erfindung sehen in diesem Zusammenhang aber vor, dass sich die Feststelleinrichtung in der geöffneten Stellung befindet, wenn der Nockenträger bei der Verdrehung von Nockenträger und Gegennockenträger relativ zueinander um die Drehachse in der Anschlagstellung unter Zwischenlage des Dämpfungskörpers am Anschlag anschlägt. In diesen Ausgestaltungsformen dämpfen die Dämpfungskörper somit das Abbremsen des Öffnens des Handbedienhebels am Ende der Drehbewegung. Dadurch können Vibrationen und Klappergeräusche in der geöffneten Stellung des Handbedienhebels vermieden werden.

Das Zusammenwirken von Nockenträger und Anschlag des Gegennockenträgers unter Zwischenlage des oder der Dämpfungskörper bildet insgesamt eine weiche und gedämpfte Anschlagfunktion. Um zusätzlich ein definitives Ende der Verdrehmöglichkeit zwischen Nockenträger und Gegennockenträger zur Verfügung zu stellen, sehen bevorzugte Ausgestaltungsformen der Erfindung vor, dass der Gegennockenträger zusätzlich zu dem Anschlag oder den Anschlägen zumindest einen Endanschlag aufweist, an dem der Nockenträger in einer von der Anschlagstellung verschiedenen Endanschlagstellung anschlägt. Dieser Endanschlag wirkt günstigerweise mit einem Gegenendanschlag oder mehreren Gegenendanschlägen am Nockenträger zusammen, dessen bzw. deren Härte größer ist als die Härte des Dämpfungskörpers. Im einfachsten Fall ist der oder die Gegenendanschläge durch jeweils ein Flächenabschnitt an jeweils einem Nocken des Nockenträgers gebildet, der direkt mit einem Endanschlag in der Endanschlagstellung in Kontakt steht. Zwischen dem oder den Endanschlägen und den jeweiligen Gegenendanschlägen ist kein Dämpfungskörper vorgesehen, so dass eine harte Endanschlagstellung erreicht ist. Günstigerweise ist vorgesehen, dass der Nockenträger ausgehend von der Anschlagstellung durch Verdrehung um die Drehachse relativ zum Gegennockenträger unter fortschreitender Kompression des Dämpfungskörpers in die Endanschlagstellung bewegbar ist. Auf diese Weise kann die maximal mögliche Kompression des Dämpfungskörpers dimensioniert werden, insbesondere um eine Dauerhaltbarkeit und bevorzugt um eine angenehme Begrenzungsfunktion darzustellen. Die Anschlagflächen von Anschlag und Endanschlag bzw. den Anschlägen, sowie den Endanschlägen und Gegenendanschläge können parallel zur Drehachse verlaufen. Es kann aber auch ein spitzer Winkel zwischen Drehachse und diesen Anschlagflächen vorgesehen sein. Dieser spitze Winkel liegt günstigerweise zwischen 2° und 10°, bevorzugt zwischen 5° und 8°. Mit Vorzug sind die Winkel zur Drehachse gesehen der Anschlagflächen von Anschlag und Endanschlag zueinander verschieden.

Grundsätzlich ist darauf hinzuweisen, dass im Sinne einer guten Langlebigkeit der Dämpfungskörper günstigerweise vorgesehen ist, dass diese im Wesentlichen mittels Kompression beaufschlagt werden. Es können geringfügige Scheranteile der Beaufschlagung vorhanden sein. Es kann sich aber auch um eine ausschließliche Kompressionsbeanspruchung der Dämpfungskörper handeln.

Der Anschlag bzw. die Anschläge sind günstigerweise bezüglich der Drehachse in radialer Richtung und/oder in Längsrichtung der Drehachse von dem Endanschlag bzw. den Endanschlägen beabstandet am Gegennockenträger angeordnet.

In den Figuren ist ein erfindungsgemäßes Ausführungsbeispiel erläutert. Es zeigen:
Fig. 1 eine Lenksäule für ein Kraftfahrzeug mit einer erfindungsgemäßen Feststelleinrichtung;
Fig. 2 eine Draufsicht aus Richtung parallel zur Drehachse auf den Gegennockenträger mit seinen Gegennocken;
Fig. 3 und 4 perspektivische bzw. Seitenansichten des Gegennockenträgers;
Fig. 5 den Nockenträger mit seinen Nocken;
Fig. 6 das Dämpfungskörperbauteil losgelöst vom Nockenträger;
Fig. 7 den Nockenträger mit aufgesetztem Dämpfungskörperbauteil;
Fig. 8 die Feststelleinrichtung in der Schließstellung;
Fig. 9 die Feststelleinrichtung in einer Zwischenstellung;
Fig. 10 die Anschlagstellung in der geöffneten Stellung der Feststelleinrichtung;
Fig. 11 das Wirksamwerden des Endanschlags in der maximal geöffneten Stellung.

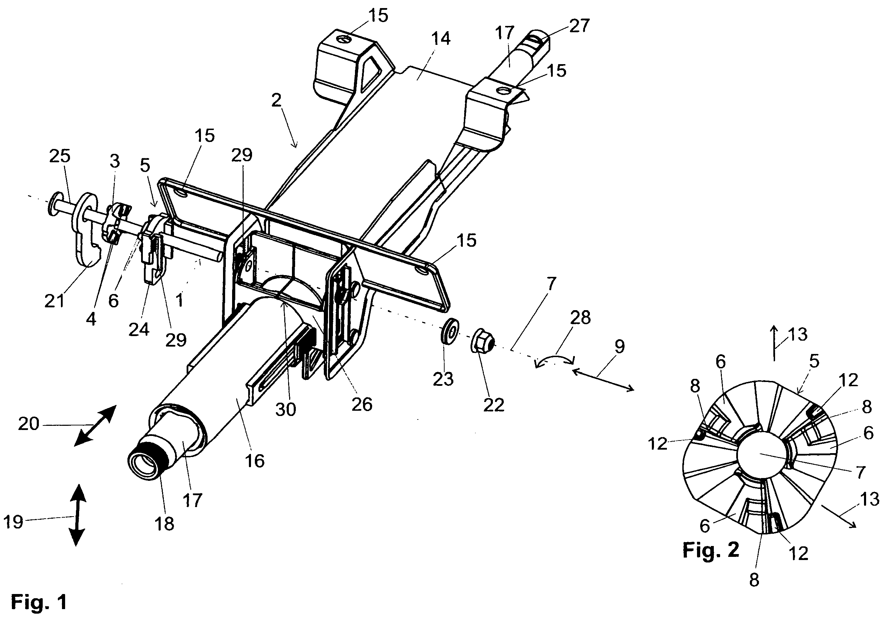

In Fig. 1 ist eine erfindungsgemäß ausgebildete verstellbare Lenksäule 2 dargestellt, wobei zunächst die beim Stand der Technik an sich bekannten Merkmale dieser Lenksäule 2 kurz geschildert werden, ohne dass dies bedeutet, dass bei erfindungsgemäßen Lenksäulen 2 diese beim Stand der Technik an sich bekannten Merkmale realisiert sein müssen.

Im in Fig. 1 dargestellten Ausführungsbeispiel weist die verstellbare Lenksäule 2 eine Trageinheit 14 auf, welche mittels der Befestigungslaschen 15 an der Karosserie eines Fahrzeugs befestigt wird. An der Trageinheit 14 ist, gegebenenfalls über einen entsprechenden, an sich bekannten Zwischenhebel 26 eine Lenkspindellagereinheit 16 verstellbar gelagert. Zur Verstellung muss zunächst die Feststelleinrichtung 1 in ihre geöffnete Position gebracht werden. In dieser geöffneten Stellung der Feststelleinrichtung 1 kann die Lenkspindellagereinheit 16 samt Lenkspindel 17 in Längen- und/oder Höhenrichtung verstellt werden. Im gezeigten Ausführungsbeispiel sind beide Verstellrichtungen möglich. Doppelpfeil 19 zeigt die möglichen Richtungen bei der Höhenverstellung. Doppelpfeil 20 zeigt die Richtungen bei der Längsverstellung. Am Lenkradanschluss 18 kann das hier nicht dargestellte Lenkrad an der Lenkspindel 17 befestigt werden. Am vorderen Ende 27 der Lenkspindel 17 kann ein Universalgelenk oder ein Lenkgetriebe, beispielsweise mit elektrischer Hilfskraftunterstützung, bekannt unter dem Namen "Colpas", angeordnet sein.

Ist die gewünschte Verstellung der Position der Lenkspindellagereinheit 16 und damit des Lenkrades durchgeführt worden, so wird die hier in einer Explosionsdarstellung gezeigte Feststelleinrichtung 1 wieder in ihre Schließstellung gebracht, in der die Position der Lenkspindellagereinheit 16 relativ zur Trageinheit 14 und damit zur Karosserie des Fahrzeugs fixiert ist.

Im gezeigten Ausführungsbeispiel wird die Feststelleinrichtung 3 mittels eines hier nur verkürzt dargestellten Handbedienhebels 21 zwischen seiner geöffneten Stellung und seiner Schließstellung verstellt. Der Handbedienhebel 21 ist im gezeigten Ausführungsbeispiel zusammen mit dem Nockenträger 3 oder dem Gegennockenträger 5, hier zusammen mit dem Nockenträger 3, um die, in diesem Ausführungsbeispiel koaxial durch den Spannbolzen 25 verlaufende Drehachse 7 verdrehbar. Der Gegennockenträger 5 ist in diesem Ausführungsbeispiel über das Zwischenteil 24 drehfest an der Trageinheit 14 befestigt. Durch Verdrehen des Handbedienhebels 21 mitsamt des Nockenträgers 3 werden der Nockenträger 3 und der Gegennockenträger 5 relativ zueinander um die Drehachse 7 über einen entsprechend vorgegebenen Verdrehwinkel 28 gegeneinander verdreht. Der Spannbolzen 25 dieses Ausführungsbeispiels ist auf der dem Handbedienhebel 21 gegenüberliegenden Seite mittels Lagerscheibe 23 und Gegenmutter 22 gesichert. Die Lagerscheibe 23 kann auch durch ein Axiallager ersetzt sein. Der Nockenträger 3 weist in diesem Ausführungsbeispiel einstückig angeformte Nocken 4 und der Gegennockenträger 5 ebenfalls einstückig angeformte Gegennocken 6 auf. Der Nockenträger 3 und der Gegennockenträger 5 sind einander gegenüberliegend um die Drehachse 7 gegeneinander verdrehbar angeordnet. Mit 9 ist die Längsrichtung der Drehachse 7 bezeichnet. Beim Verdrehen des Nockenträgers 3 gegen den weiteren Gegennockenträger 5 entlang des Verdrehwinkels 28 um die Drehachse 7 liegen die Nocken 4 des Nockenträgers 3 mit ihren Nockenkonturflächen 32 an jeweils einer Gegennockenkonturflächen 33 der Gegennocken 6 des Gegennockenträgers 5 aneinander entlang gleitend an. Der Vollständigkeit halber wird darauf hingewiesen, dass die Anzahl der auf dem Nockenträger 3 und dem Gegennockenträger 5 angeordneten Nocken 4 bzw. Gegennocken 6 variieren kann. Das Minimum ist jeweils ein einzelner Nocken 4 bzw. Gegennocken 6 pro Nockenträger 3 bzw. Gegennockenträger 5. Im gezeigten Ausführungsbeispiel weisen Nockenträger 3 bzw. Gegennockenträger 5 jeweils drei Nocken 4 bzw. Gegennocken 6 auf. Die Zahl der Nocken 4 bzw. Gegennocken 6 kann aber, wie gesagt, variieren bzw. andere Werte annehmen. Günstig ist es jedenfalls, wenn jeweils ein Nocken 4 des Nockenträgers 3 mit einem Gegennocken 6 des Gegennockenträgers 5 zusammenwirkt.

Der Vollständigkeit halber wird, wie bereits eingangs erläutert, darauf hingewiesen, dass erfindungsgemäße Anordnungen von Nockenträgern 3 und Gegennockenträgern 5 sowohl bei reibschlüssig als auch bei formschlüssig arbeitenden Feststelleinrichtungen 1 eingesetzt werden können. Im gezeigten Ausführungsbeispiel ist an den Verzahnungen 29 zu erkennen, dass es sich hier in Bezug auf die Höhenverstellung in Richtung des Doppelpfeils 19 um eine formschlüssig arbeitende Feststelleinrichtung 3 handelt, und in Längenverstellrichtung in Richtung des Doppelpfeils 20 um eine reibschlüssige Verbindung, entlang der Kontaktflächen 30 zwischen dem Zwischenhebel 26 und der Lenkspindellagereinheit 16, handelt.

Fig. 2 zeigt eine Draufsicht auf die Gegennocken 6 des Gegennockenträgers 5. Eingezeichnet ist auch die Drehachse 7, um die der Nockenträger 3 und der Gegennockenträger 5 gegeneinander durch die Betätigung des Handbedienhebels 21 verdreht werden, sowie beispielhaft auch die radialen Richtungen 13.

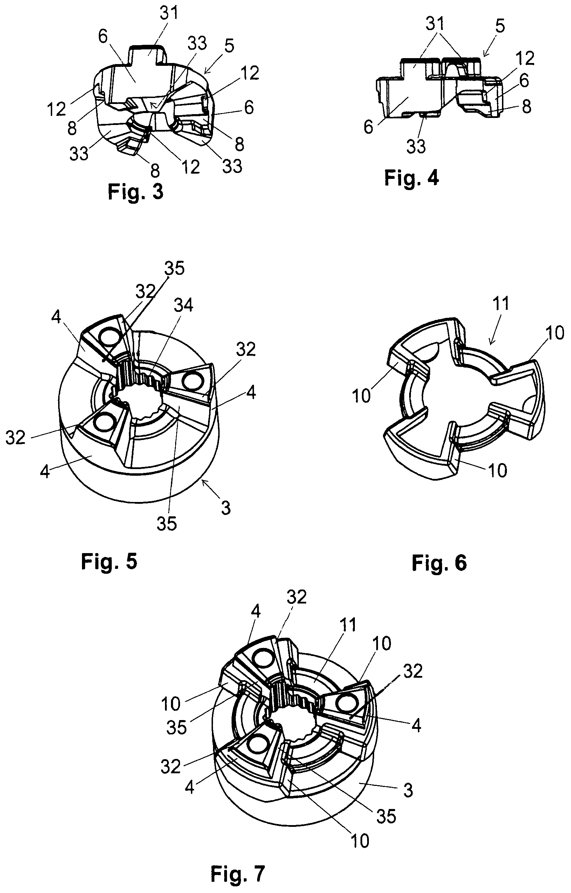

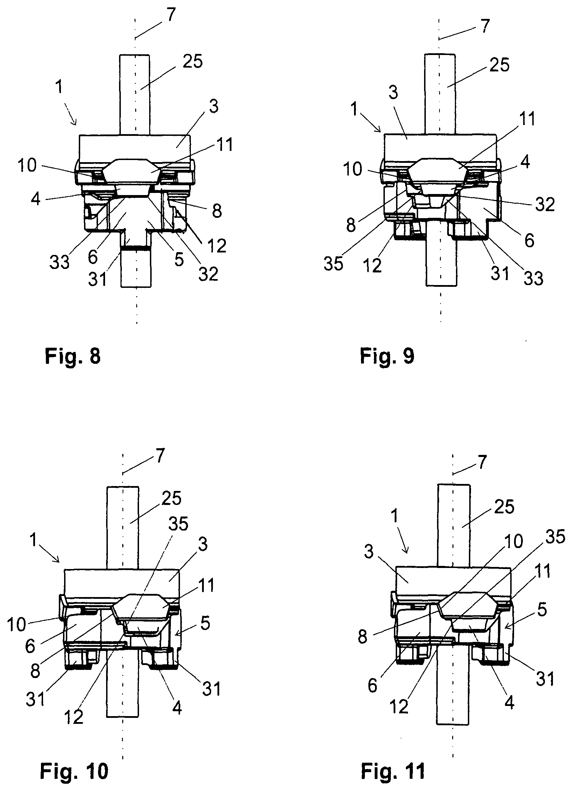

In der in Fig. 2 gewählten Draufsicht sieht man auf die bereichsweise rampenartig ausgebildeten Gegennockenkonturflächen 33 der Gegennocken 6, an denen die Nockenkonturflächen 32 der weiter unten erläuterten und in Fig. 5 und 7 gezeigten Nocken 4 des Nockenträgers 3 entlanggleiten, um den zur Verstellung der Feststelleinrichtung 1 in Längsrichtung 9 der Drehachse 7 benötigen Hub zu erzeugen. Zu sehen sind in der Draufsicht gemäß Fig. 2 auch die Anschläge 8 und die Endanschläge 12. Beim Anschlag 8 handelt es sich um den Anschlag bzw. die Anschläge, an denen der Nockenträger 3 an diese Anschläge 8 unter Zwischenschaltung der Dämpfungskörper 10 anschlägt. Mit 12 sind die Endanschläge bezeichnet, die den Verdrehweg vom Nockenträger 3 relativ zum Gegennockenträger 5 maximal begrenzen. Die Endanschläge 12 wirken mit den Gegenendanschlägen 35 am Nockenträger 3 zusammen (vgl. Fig. 5 und 11). Eine zusätzliche Dämpfung ist hier nicht vorgesehen.

Die Anschläge 8 und die Endanschläge 12 können in radialer Richtung 13 und/oder in Längsrichtung 9 der Drehachse 7 voneinander distanziert angeordnet sein.

In der perspektivischen Darstellung des Gegennockenträgers 5 in Fig. 3 wie auch in der Seitenansicht gemäß Fig. 4 sieht man zusätzlich noch die Fixierungszapfen 31, mit denen der Gegennockenträger 5 in diesem Ausführungsbeispiel drehfest am Zwischenteil 24 und damit an der Trageinheit 14 befestigt ist.

Fig. 5 zeigt eine perspektivische Ansicht auf den Nockenträger 3 dieses erfindungsgemäßen Ausführungsbeispiels. Zu sehen ist neben den Nocken 4 und deren Nockenkonturflächen 32 auch das Formschlusselement 34 dieses Ausführungsbeispiels, welches dazu dient, den Nockenträger 3 drehfest am Spannbolzen 25 zu befestigen. Weiter sind die Gegenendanschläge 35 dargestellt.

Fig. 6 zeigt das Dämpfungskörperbauteil 11, welche alle Dämpfungskörper 10 dieses Ausführungsbeispiels in Form eines gemeinsamen in sich zusammenhängenden Bauteils realisiert, welches zunächst als separates Bauteil gefertigt und dann in diesem Ausführungsbeispiel am Nockenträger 3 befestigt wird. In der gezeigten Ausführungsform handelt es sich um ein ringartiges Dämpfungskörperbauteil 11. Das Dämpfungskörperbauteil 11 kann z.B. als Aufsteckkörper ausgeführt sein, welcher dann nach dem Aufstecken am Nockenträger 3 oder auch am Gegennockenträger 5 an diesem befestigt wird. Die Befestigung kann durch Reibschluss, Formschluss wie z.B. Einrasten, Vernieten, Festschrauben oder durch andere gängige Varianten der Befestigung realisiert werden. Im gezeigten Ausführungsbeispiel handelt es sich, wie bevorzugt auch vorgesehen, um ein einteiliges Bauteil aus einem einzigen Material. Es kann sich bei dem Material des Dämpfungskörperbauteils 11 z.B. um Elastomere wie z.B. Gummi oder dergleichen handeln. Natürlich sind auch mehrteilige Aufbauten mit verschiedenen Materialien denkbar.

Fig. 7 zeigt das Dämpfungskörperbauteil 11 in der am Nockenträger 3 befestigten Stellung. Die Dämpfungskörper 10, die bei diesem Ausführungsbeispiel zur Dämpfungswirkung zum Einsatz kommen, sind in Fig. 7 markiert. Das Dämpfungskörperbauteil 11 ist dabei so gestaltet, dass die Gegenendanschläge 35 am Nockenträger 3 frei liegen, so dass diese mit den Endanschlägen 12 am Gegennockenträger 5 zusammenwirken können.

Anhand der Fig. 8 bis 11 sind verschiedene Stellungen der Feststelleinrichtung 1 gezeigt. Die Feststelleinrichtung 1 kann, wie hier auch realisiert, zusätzlich zum erfindungsgemäßen Nockenträger 3 und Gegennockenträger 5 und den Dämpfungskörpern 10 auch den Spannbolzen 25 mit umfassen. Im gezeigten Ausführungsbeispiel ist, wie dies günstigerweise realisiert wird, sowohl der Nockenträger 3 als auch der Gegennockenträger 5 auf den Spannbolzen 25 aufgesteckt. Die Drehachse 7 entspricht hier der Längsmittelachse des Spannbolzens 25.

Fig. 8 zeigt die Feststelleinrichtung 1 dieses Ausführungsbeispiels in der Schließstellung. Nockenträger 3 und Gegennockenträger 5 sind in dieser Stellung so gegeneinander verdreht, dass zwischen ihnen der maximale Abstand eingestellt ist. Die Nockenkonturfläche 32 liegt in diesem Zustand der Schließstellung an einem entsprechend erhabenen Bereich der Gegennockenkonturfläche 33 der entsprechenden Gegennocken 6 an. Diese Stellung wird durch Reibschluss aufrecht erhalten und erst dann verlassen, wenn der Handbedienhebel 21 dieses Ausführungsbeispiels entsprechend betätigt wird. An dieser Stelle sei darauf hingewiesen, dass an Stelle eines Handbedienhebels natürlich auch eine motorische Betätigung der Feststelleinrichtung 1 denkbar und möglich ist.

Fig. 9 zeigt nun eine Zwischenstellung der Feststelleinrichtung 1 zwischen der Schließstellung und deren geöffneter Stellung. In der, in Fig. 9 gezeigten Stellung gleitet die Nockenkonturfläche 32 gerade über die Rampen der Gegennockenkonturfläche 33. In Fig. 10 befindet sich die Feststelleinrichtung 1 in einer ersten geöffneten Stellung, in der die verstellbare Lenksäule 2 in den Richtungen 19 und/oder 20 verstellt werden kann. In Fig. 10 ist die Anschlagstellung dargestellt, bei der der Nockenträger 3 unter Zwischenlage der jeweiligen Dämpfungskörper 10 an den Anschlägen 8 des Gegennockenträgers 5 anschlägt. Bei der hier dargestellten Variante tut dies der Nockenträger 3 mit seinem Nocken 4. In dieser geöffneten Stellung liegt günstigerweise bereits ein gewisser Reibschluss vor, der ohne Kraftaufwendung am Handbedienhebel 21 die Feststelleinrichtung 1 in dieser Position hält. Wird der Handbedienhebel 21 in diesem Ausführungsbeispiel nun noch weiter in Öffnungsrichtung beaufschlagt, so führt dies zu einer mit dem Drehwinkel fortschreitenden Komprimierung der Dämpfungskörper 10 und zu einem weiteren Verdrehen des Nockenträgers 3 gegen den Gegennockenträger 5 bis, wie in Fig. 11 dargestellt, die Endanschlagstellung erreicht ist, in der Nockenträger 3 hier mit seinen Gegenendanschlägen 35 an den Endanschlägen 12 des Gegennockenträgers 5 anschlägt. Im Ausführungsbeispiel liegt in der Anschlagstellung der Nockenträger 3 mit einem Teil der Fläche des Gegenanschlages 35 unter Zwischenlage des Dämpfungskörpers 10 am Anschlag 8 an. Dabei wird der Dämpfungskörper 10 komprimiert. Der Dämpfungskörper 10 verdeckt entsprechend die Fläche des Gegenendanschlages 35 und damit des Nockenträgers 3 teilweise. Der nicht abgedeckte Bereich des Gegenendanschlages 35 wirkt direkt mit dem Endanschlag 12 zur Begrenzung der Verdrehung zusammen. Günstigerweise ist vorgesehen, dass Nockenträger 3 und Gegennockenträger 5 auch in der Endanschlagstellung gemäß Fig. 11 reibschlüssig von selbst arretiert sind. Durch die gezeigten Maßnahmen werden Vibrationen im geöffneten Zustand der Feststelleinrichtung 1 weitgehend vermieden. Weiters werden die eingangs genannten Effekte des angenehmen Bediengefühls und der Absicherung der Dauerhaltbarkeit des Dämpfungskörpers erreicht.

**Legende zu den Hinweisziffern:**

| | | | |
|---|---|---|---|
| 1 | Feststelleinrichtung | 19 | Richtung |
| 2 | Lenksäule | 20 | Richtung |
| 3 | Nockenträger | 21 | Handbedienhebel |
| 4 | Nocken | 22 | Gegenmutter |
| 5 | Gegennockenträger | 23 | Lagerscheibe |
| 6 | Gegennocken | 24 | Zwischenteil |
| 7 | Drehachse | 25 | Spannbolzen |
| 8 | Anschlag | 26 | Zwischenhebel |
| 9 | Längsrichtung | 27 | Ende |
| 10 | Dämpfungskörper | 28 | Verdrehwinkel |
| 11 | Dämpfungskörperbauteil | 29 | Verzahnung |
| 12 | Endanschlag | 30 | Kontaktfläche |
| 13 | radiale Richtung | 31 | Fixierungszapfen |
| 14 | Trageinheit | 32 | Nockenkonturfläche |
| 15 | Befestigungslaschen | 33 | Gegennockenkonturfläche |
| 16 | Lenkspindellagereinheit | 34 | Formschlusselement |
| 17 | Lenkspindel | 35 | Gegenendanschlag |
| 18 | Lenkradanschluss | | |

## Patentansprüche

1. Feststelleinrichtung (1) für eine verstellbare Lenksäule (2) für ein Kraftfahrzeug, wobei die Feststelleinrichtung (1) einen Nockenträger (3) mit zumindest einem fix daran angeordneten Nocken (4) und zumindest einen Gegennockenträger (5) mit zumindest einem fix daran angeordneten Gegennocken (6) und mit zumindest einem Anschlag (8) aufweist, wobei der Nockenträger (3) und der Gegennockenträger (5) relativ zueinander um eine Drehachse (7) verdrehbar angeordnet sind und der Nocken (4) des Nockenträgers (3) bei Verdrehung von Nockenträger (3) und Gegennockenträger (5) relativ zueinander um die Drehachse (7) mit dem Gegennocken (6) des Gegennockenträgers (5) zur Erzeugung eines Hubes in Längsrichtung (9) der Drehachse (7) zusammenwirkt, **dadurch gekennzeichnet, dass** die Feststelleinrichtung (1) zumindest einen Dämpfungskörper (10) aufweist, welcher zumindest ein elastisch deformierbares Material aufweist, welches weicher als der Nockenträger (3) und der Anschlag (8) ist, wobei der Nockenträger (3) bei der Verdrehung von Nockenträger (3) und Gegennockenträger (5) relativ zueinander um die Drehachse (7) in einer Anschlagstellung unter Zwischenlage des Dämpfungskörpers (10) am Anschlag (8) anschlägt.

2. Feststelleinrichtung (1) nach Anspruch 1, **dadurch gekennzeichnet, dass** der Dämpfungskörper (10) ein zunächst separat gefertigtes und dann am Nockenträger (3) oder am Gegennockenträger (5) befestigtes Bauteil ist.

3. Feststelleinrichtung (1) nach Anspruch 1 oder 2, **dadurch gekennzeichnet, dass** der Dämpfungskörper (10) zumindest einen elastisch deformierbaren Körper aufweist oder daraus besteht.

4. Feststelleinrichtung (1) nach einem der Ansprüche 1 bis 3, **dadurch gekennzeichnet, dass** der Nockenträger (3) in der Anschlagstellung unter Zwischenlage mehrerer Dämpfungskörper (10) an mehreren Anschlägen (8) des Gegennockenträgers (5) anschlägt.

5. Feststelleinrichtung (1) nach Anspruch 4, **dadurch gekennzeichnet, dass** die Dämpfungskörper (10) Teil eines gemeinsamen, in sich zusammenhängenden Dämpfungskörperbauteils (11) sind, welches zunächst als separates Bauteil gefertigt und dann am Nockenträger (3) oder am Gegennockenträger (5) befestigt ist.

6. Feststelleinrichtung (1) nach einem der Ansprüche 1 bis 5, **dadurch gekennzeichnet, dass** die Feststelleinrichtung (1) eine geöffnete Stellung zur Verstellung der Lenksäule und zumindest eine Schließstellung zur Arretierung der Lenksäule aufweist, wobei sich die Feststelleinrichtung (1) in der geöffneten Stellung befindet, wenn der Nockenträger (3) bei der Verdrehung von Nockenträger (3) und Gegennockenträger (5) relativ zueinander um die Drehachse (7) in der Anschlagstellung unter Zwischenlage des Dämpfungskörpers (10) am Anschlag (8) anschlägt.

7. Feststelleinrichtung (1) nach einem der Ansprüche 1 bis 6, **dadurch gekennzeichnet, dass** der Gegennockenträger (5) zusätzlich zu dem Anschlag (8) oder den Anschlägen (8) zumindest einen Endanschlag (12) aufweist, an dem der Nockenträger (3) in einer von der Anschlagstellung verschiedenen Endanschlagstellung anschlägt.

8. Feststelleinrichtung (1) nach Anspruch 7, **dadurch gekennzeichnet, dass** der Nockenträger (3) ausgehend von der Anschlagstellung durch Verdrehung um die Drehachse (7) relativ zum Gegennockenträger (5) unter fortschreitender Kompression des Dämpfungskörpers (10) in die Endanschlagstellung bewegbar ist.

9. Feststelleinrichtung (1) nach Anspruch 7 oder 8, **dadurch gekennzeichnet, dass** der Anschlag (8) bzw. die Anschläge (8) bezüglich der Drehachse (7) in radialer Richtung (13) und/oder in Längsrichtung (9) der Drehachse (7) von dem Endanschlag (12) bzw. den Endanschlägen (12) beabstandet am Gegennockenträger (5) angeordnet sind.

10. Feststelleinrichtung (1) nach einem der Ansprüche 1 bis 9, **dadurch gekennzeichnet, dass** der Nocken (4) bzw. die Nocken (4) und der Gegennocken (6) bzw. die Gegennocken (6) ausschließlich aneinander entlang gleitend zusammenwirken.

## Claims

1. Locking device (1) for an adjustable steering column (2) for a motor vehicle, wherein the locking device (1) comprises a cam carrier (3) with at least one cam (4) fixedly disposed thereon and at least one countercam carrier (5) with at least one countercam (6) fixedly disposed thereon and with at least one stop (8), wherein the cam carrier (3) and the countercam carrier (5) are disposed rotatably relative to one another about a rotational axis (7), and the cam (4) of the cam carrier (3), upon rotation of the cam carrier (3) and the countercam carrier (5) relative to one another about the rotational axis (7), cooperates with the countercam (6) of the countercam carrier (5) for generating a deflection in a longitudinal direction (9) of the rotational axis (7), **characterised in that** the locking device (1) comprises at least one damping body (10) which comprises at least one elastically deformable material that is softer than the cam carrier (3) and the stop (8), wherein the cam carrier (3), upon the rotation of the cam carrier (3) and the countercam carrier (5) relative to one another about the rotational axis (7), impacts in an abutment position on the stop (8) with the interposition of the damping body (10).

2. Locking device (1) according to claim 1, **characterised in that** the damping body (10) is an initially separately fabricated structural part and subsequently secured on the cam carrier (3) or on the countercam carrier (5).

3. Locking device (1) according to claim 1 or 2, **characterised in that** the damping body (10) comprises or consists of at least one elastically deformable body.

4. Locking device (1) according to one of claims 1 to 3, **characterised in that** the cam carrier (3) in the abutment position with the interposition of a plurality of damping bodies (10) impacts on a plurality of stops (8) of the countercam carrier (5).

5. Locking device (1) according to claim 4, **characterised in that** the damping bodies (10) are part of a common contiguous structural damping body part (11) which is initially fabricated as a separate structural part and subsequently secured on the cam carrier (3) or on the countercam carrier (5).

6. Locking device (1) according to one of claims 1 to 5, **characterised in that** the locking device (1) is in an open position for the adjustment of the steering column and at least one closed position for arresting the steering column, wherein the locking device (1) is in the open position when the cam carrier (3), upon the rotation of the cam carrier (3) and the countercam carrier (5) relative to one another about the rotational axis (7), impacts in the abutment position on the stop (8) with the interposition of the damping body (10).

7. Locking device (1) according to one of claims 1 to 6, **characterised in that** the countercam carrier (5), in addition to the stop (8) or the stops (8) comprises at least one end stop (12) on which the cam carrier (3) impacts in an end abutment position differing from the abutment position.

8. Locking device (1) according to claim 7, **characterised in that** the cam carrier (3), starting from the abutment position, is movable into the end abutment position with the progressing compression of the damping body (10) by rotation about the rotational axis (7) relative to the countercam carrier (5).

9. Locking device (1) according to claim 7 or 8, **characterised in that** the stop (8) or the stops (8) are disposed on the countercam carrier (5) spaced apart from the end stop (12) or the end stops (12) with respect to the rotational axis (7) in the radial direction (13) and/or in the longitudinal direction (9) of the rotational axis (7).

10. Locking device (1) according to one of claims 1 to 9, **characterised in that** the cam (4) or the cams (4) and the countercam (6) or the counter cams (6) cooperate exclusively by sliding along one another.

## Revendications

1. Dispositif de fixation (1) pour une colonne de direction réglable (2) d'un véhicule automobile, dans lequel le dispositif de fixation (1) comprend un porte-cames (3) avec au moins une came (4) fixée sur celui-ci et au moins un porte-cames opposé (5) avec une came opposée (6) fixée sur celui-ci et avec au moins une butée (8), dans lequel le porte-cames (3) et le porte-cames opposé (5) sont disposés de façon rotative l'un par rapport à l'autre autour d'un axe de rotation (7) et la came (4) du porte-cames (3) coopère, lors de la rotation du porte-cames (3) et du porte-cames opposé (5) l'un par rapport à l'autre autour de l'axe de rotation (7), avec la contre-came (6) du porte-cames opposé (5) pour produire une levée dans la direction longitudinale (9) de l'axe de rotation (7), **caractérisé en ce que** le dispositif de fixation (1) présente au moins un corps d'amortissement (10), qui présente au moins un matériau déformable élastiquement, qui est plus souple que le porte-cames (3) et la butée (8), dans lequel le porte-cames (3), lors de la rotation du porte-cames (3) et du porte-cames opposé (5) l'un par rapport à l'autre autour de l'axe de rotation (7), vient buter contre la butée (8) dans une position de butée avec interposition du corps d'amortissement (10).

2. Dispositif de fixation (1) selon la revendication 1, **caractérisé en ce que** le corps d'amortissement (10) est un composant d'abord fabriqué séparément et est ensuite fixé au porte-cames (3) ou au porte-cames opposé (5).

3. Dispositif de fixation (1) selon la revendication 1 ou 2, **caractérisé en ce que** le corps d'amortissement (10) présente au moins un corps déformable élastiquement ou en est constitué.

4. Dispositif de fixation (1) selon l'une quelconque des revendications 1 à 3, **caractérisé en ce que** le porte-cames (3) bute dans sa position de butée sur plusieurs butées (8) du porte-cames opposé (5) avec interposition de plusieurs corps d'amortissement (10).

5. Dispositif de fixation (1) selon la revendication 4, **caractérisé en ce que** les corps d'amortissement (10) font partie d'un composant de corps d'amortissement commun par nature continu (11), qui est d'abord fabriqué comme composant séparé et est ensuite fixé au porte-cames (3) ou au porte-cames opposé (5).

6. Dispositif de fixation (1) selon l'une quelconque des revendications 1 à 5, **caractérisé en ce que** le dispositif de fixation (1) présente une position ouverte pour le réglage de la colonne de direction et au moins une position fermée pour le blocage de la colonne de direction, dans lequel le dispositif de fixation (1) se trouve dans la position ouverte lorsque le porte-cames (3), lors de la rotation du porte-cames (3) et du porte-cames opposé (5) l'un par rapport à l'autre autour de l'axe de rotation (7), bute contre la butée (8) dans la position de butée avec interposition du corps d'amortissement (10).

7. Dispositif de fixation (1) selon l'une quelconque des revendications 1 à 6, **caractérisé en ce que** le porte-cames opposé (5) présente en plus de la butée (8) ou des butées (8) au moins une butée d'extrémité (12), sur laquelle le porte-cames (3) vient buter dans une position de butée d'extrémité différente de la position de butée.

8. Dispositif de fixation (1) selon la revendication 7, **caractérisé en ce que** le porte-cames (3) peut être déplacé à partir de la position de butée par rotation autour de l'axe de rotation (7) par rapport au porte-cames opposé (5) jusqu'à la position de butée d'extrémité avec compression progressive du corps d'amortissement (10).

9. Dispositif de fixation (1) selon la revendication 7 ou 8, **caractérisé en ce que** la butée (8) ou les butées (8) sont disposées sur le porte-cames opposé (5) à distance en direction radiale par rapport à l'axe de rotation (7) et/ou de la butée d'extrémité (12) ou des butées d'extrémité (12) dans la direction longitudinale (9) de l'axe de rotation (7).

10. Dispositif de fixation (1) selon l'une quelconque des revendications 1 à 9, **caractérisé en ce que** la came (4) ou les cames (4) et la contre-came (6) ou les contre-cames (6) coopèrent exclusivement en glissant l'une sur l'autre.
